# EUROPÄISCHE PATENTSCHRIFT

(11) **EP 3 785 512 B1**
(45) Veröffentlichungstag und Bekanntmachung des Hinweises auf die Patenterteilung: **22.05.2024**
(21) Anmeldenummer: 20401047.4
(22) Anmeldetag: 19.08.2020
(51) Int. Cl.: A01C 15/00, A01C 17/00

(54) **VERTEILMASCHINE MIT SIEBARTIGER ABDECKUNG UND SIEBARTIGE ABDECKUNG**
DISTRIBUTION MACHINE WITH SIEVE-LIKE COVER AND SIEVE-LIKE COVER
MACHINE DE DISTRIBUTION POURVU DE COUVERCLE DE TYPE TAMIS ET COUVERCLE DE TYPE TAMIS

(30) Priorität: 28.08.2019 DE 102019123043
(43) Veröffentlichungstag der Anmeldung: 03.03.2021
(73) Patentinhaber: Amazonen-Werke H. Dreyer SE & Co. KG, 49205 Hasbergen (DE)
(72) Erfinder: Kleine-Hartlage, Hubertus, 49186 Bad Iburg (DE); Hofter, Rainer, 49143 Bissendorf (DE)

(56) Entgegenhaltungen:
- EP-A1- 2 353 358
- DE-A1- 2 847 002
- DE-A1- 4 309 730
- DE-U1-202007 007 024

## Beschreibung

Die Erfindung betrifft eine Verteilmaschine gemäß dem Oberbegriff des Patentanspruches 1 und eine siebartige Abdeckung gemäß dem Oberbegriff des Patentanspruches 13.

Eine derartige Verteilmaschine mit einer siebartigen Abdeckung ist in DE 43 09 730 A1 beschrieben. Diese Verteilmaschine ist als Düngerstreuer ausgebildet und umfasst einen Vorratsbehälter für das zu verteilende Material, in diesem Fall Dünger. Der Vorratsbehälter lässt sich in zwei Hälften unterteilen, die jeweils im unteren Bereich trichterförmig zulaufen und über den oberen Bereich des Vorratsbehälters verbunden sind. Im unteren trichterförmigen Bereich des Vorratsbehälters ist jeweils eine als Rührorgan ausgebildete, angetriebene Dosiereinrichtung angeordnet, unter der jeweils eine Schleuderscheibe zum Verteilen des Materials angeordnet ist.

Um den Benutzer vor Verletzungen durch Eingriff in das rotierend antreibbare Rührorgan zu schützen, ist oberhalb der Dosiereinrichtungen jeweils eine siebartige Abdeckung im Vorratsbehälter angeordnet. Die siebartigen Abdeckungen sind in dem Bereich des Vorratsbehälters angeordnet, wo dieser sich in die zwei trichterförmigen Hälften aufteilt, so dass jeder Hälfte eine Abdeckung zugeordnet ist. Zur Vermeidung aufwändiger Tragstrukturen sind die siebartigen Abdeckungen selbsttragend ausgebildet, d.h. die Abdeckungen liegen lediglich im Bereich der Vorratsbehälterwände an diesen an und überspannen den Vorratsbehälter indem sie sich zwischen selbigen Behälterwänden erstrecken. Neben dem Schutz für den Benutzer dienen die Abdeckungen auch dazu mit dem zu verteilenden Material in den Vorratsbehälter eingefüllte Fremdkörper oder zusammenbackende Klumpen des Materials aufzufangen, um diese nicht zur Dosiereinrichtung gelangen zu lassen. Zu diesem Zweck sind die Abdeckungen siebartig ausgeführt. Fremdkörper und Klumpen bzw. Kluten werden aus dem rieselfähigen Material ausgesiebt und bleiben auf den Maschen der Abdeckung liegen, während das Material hindurchtreten kann. Die Fremdkörper können dann von dem Benutzer entfernt und die Klumpen bei modernen Verteilmaschinen beispielsweise durch Betreten der siebartigen Abdeckung mit dem Fuß zerkleinert werden.

Moderne Verteilmaschinen weisen allerdings zunehmend größere Vorratsbehälter auf, um eine hohe Schlagkraft beim Verteilvorgang zu erreichen. Damit die Abdeckung aber weiter für den Benutzer gut erreichbar bleibt ist sie regelmäßig im oberen Bereich angeordnet, wo der Vorratsbehälter einen großen Öffnungsquerschnitt bzw. große Öffnungsquerschnitte, also große Abstände zwischen den Behälterwänden, aufweist. Um eine ausreichende Tragkraft für derartig ausladende, großflächige, siebartige Abdeckungen zu erreichen, werden diese seit jeher aus Metall gefertigt.

Nachteilig ist hierbei, dass nicht nur das Gesamtgewicht der Verteilmaschine durch die massiven Abdeckungen enorm ansteigt. Sondern auch, dass aufwändige Vorkehrungen zu treffen sind, damit die den Vorratsbehälter vor Korrosion schützende Lackschicht nicht durch die schweren Abdeckungen beschädigt wird. Hierzu sind bei der vorstehend beschriebenen Verteilmaschine beispielsweise zusätzliche Abstandshalter vorgesehen, welche wiederum das Risiko bergen, dass Fremdkörper und/oder Kluten zwischen Behälterwand und Abdeckung durch den mittels der Abstandshalter geschaffenen Spalt zwischen Abdeckung und Vorratsbehälterwand hindurchgelangen. Zudem ist auch die metallische, siebartige Abdeckung selbst vor Rost zu schützen, um eine anhaltend hohe Tragkraft und Funktionssicherheit bei der Verwendung der häufig korrosionsfördernden Materialien gewährleisten zu können. Hierzu sind bisher die siebartigen Abdeckungen mit einer geeigneten Beschichtung zu überziehen, wobei diese Maßnahme aufwändig und kostenintensiv ist.

Die der Erfindung zugrundeliegende Aufgabe besteht folglich darin, eine siebartige Abdeckung zu schaffen, welche die Nachteile im Stand der Technik überwindet. Insbesondere soll eine kostengünstige, vorzugsweise leichte, Umsetzung erreicht werden, die insbesondere der Korrosionsproblematik, vorzugsweise an der Abdeckung selbst, ebenso wie am Vorratsbehälter, Rechnung trägt.

Diese Aufgabe wird erfindungsgemäß durch eine Verteilmaschine mit den Merkmalen von Anspruch 1 gelöst. Erfindungsgemäß ist vorgesehen, dass die siebartige Abdeckung aus einem thermoplastischen Kunststoff gebildet ist.

Die Erfindung macht sich die Erkenntnis zunutze, dass die Verwendung von thermoplastischem Kunststoff den Einsatz kostengünstiger Fertigungsverfahren ebenso ermöglicht wie eine leichte Bauweise bei zudem hoher Korrosionsbeständigkeit. Vorzugsweise weist der Kunststoff einen Glasfaseranteil von 20 bis 40 Prozent, besonders vorzugsweise von annährend 30 Prozent, auf, so dass die Tragkraft der siebartigen Abdeckung in besonderem Maße gesteigert ist. Insbesondere ist die siebartige Abdeckung infolge dieser Maßnahme im Spritzgussverfahren fertigbar.

Untersuchungen haben gezeigt, dass durch die erfindungsgemäße siebartige Abdeckung die den Vorratsbehälter umgebende Lackschicht in überraschender Weise besonders geschont wird, wodurch die Korrosionsbeständigkeit des Vorratsbehälters erheblich verbessert ist. Dies konnte zum einen auf das reduzierte Eigengewicht der siebartigen Abdeckung zurückgeführt werden, wodurch die mechanische Dauerbelastung der Lackschicht gesenkt ist. Zum anderen sind infolge der Materialpaarung von siebartiger Abdeckung und Lackschicht die Kontaktbedingungen besonders schonend für beide Komponenten gestaltet.

Bei der erfindungsgemäßen Verteilmaschine ist vorgesehen, dass die siebartige Abdeckung im Wesentlichen gebildet ist durch aufrechte Tragstege und balkenartige Siebelemente. Die Tragstege verleihen der Abdeckung durch ihre aufrechte Form ein besonders hohes Widerstandsmoment, insbesondere in senkrecht auf die Abdeckung wirkender Hauptbelastungsrichtung, und steigern somit in besonderem Maße die Tragfähigkeit. Die balkenartigen Siebelemente tragen ebenfalls zur Tragfähigkeit bei, indem sie die vorhandenen Strukturen siebartig vernetzen. Zudem ist die siebartige Abdeckung durch geeignete Gestaltung der balkenartigen Siebelemente, insbesondere durch Anordnung im vorteilhaften Abstand zueinander, an die Größe der aufzufangenden Fremdkörper und/oder Kluten anpassbar. Durch die Kombination aus aufrechten Tragstegen und balkenartigen Siebelementen ist die Abdeckung folglich in einer leichten Bauweise mit großer Festigkeit geschaffen und erfüllt in verbessertem Maße ihre Siebfunktion. Die siebartige Abdeckung kann durch eine umlaufende Zarge eingefasst sein. Insbesondere weist die Abdeckung eine rechteckige Grundform mit, vorzugsweise im 45 Grad Winkel, abgeschrägten Ecken auf. Die Tragstege und/oder Siebelemente können wiederrum einen runden, rautenförmigen und/oder trapezartigen Querschnitt aufweisen. Die Tragstege und die Siebelemente können an der Oberseite der siebartigen Abdeckung einen einheitlichen Abschluss ausbilden, das heißt sie bilden zusammen eine rutsch- und trittsichere Oberfläche für den Benutzer.

In einer besonders vorteilhaften Weiterbildung der erfindungsgemäßen Verteilmaschine sind die Tragstege und die Siebelemente jeweils in einer Gitterstruktur mit vorzugsweise nahezu rechteckigen Maschen angeordnet. Insbesondere kann sich die Gitterstruktur der Tragstege von der Gitterstruktur der Siebelemente unterscheiden. Die Gitterstruktur kann alternativ oder zumindest teilweise zusätzlich sechseck- oder kreisförmig ausgebildet sein. Die Anordnung der Tragstege und Siebelemente jeweils in Gitterstruktur trägt gleichermaßen zum Auffangen von Fremdkörpern und Kluten, sowie zu einer weiter gesteigerten Tragfähigkeit bei.

Um eine besonders leichte Bauweise bei ausreichend hoher Tragfähigkeit zu erreichen, ist in einer weiteren Ausgestaltung der erfindungsgemäßen Verteilmaschine vorgesehen, dass die Tragstege eine Maschenteilung von zumindest annährend 50 Millimetern aufweisen. Die Tragstege weisen, insbesondere in Längsrichtung und Querrichtung, folglich einen Abstand von zumindest annährend 50 Millimetern zueinander auf. So ergibt sich eine besonders steife Anordnung.

In einer anderen vorteilhaften Ausgestaltung der erfindungsgemäßen Verteilmaschine weisen die Siebelemente eine Maschenteilung von zumindest annährend 50 Millimetern auf. Die Siebelemente sind, insbesondere in Längsrichtung und in Querrichtung, also um zumindest annährend 50 Millimeter beabstandet zueinander angeordnet. So ergibt sich eine besonders geeignete Siebanordnung für die Abdeckung.

Außerdem ist eine erfindungsgemäße Verteilmaschine vorteilhaft, bei welcher die Tragstege und die Siebelemente derart, vorzugsweise in Längsrichtung und Querrichtung um annährend eine halbe Maschenteilung, versetzt zueinander angeordnet sind, dass sich eine lichte Maschenweite von zumindest annährend 20 Millimetern für die siebartige Abdeckung ergibt. Infolge dieser Maßnahme ist die siebartige Abdeckung mit geringem Eigengewicht bei ausreichender Tragfähigkeit geschaffen und weist eine lichte Maschenweite auf, die sich als besonders geeignet für die Filterung von Fremdkörpern und/oder Kluten erwiesen hat. Insbesondere ergibt sich die Maschenweite aus der Überlagerung der Gitterstrukturen von Tragstegen und Siebelementen und/oder die geeigneten Maschenteilungen. Vorzugsweise weisen die Maschen eine Rechteckform, besonders vorzugsweise zumindest annährend Quadratform, auf.

Bei der erfindungsgemäßen Verteilmaschine, ist vorgesehen, dass die Höhe der Tragstege vom Rand der siebartigen Abdeckung zur Mitte hin zunimmt. In einer weiteren bevorzugten Ausführung der erfindungsgemäßen Verteilmaschine ist vorgesehen, dass die Höhe der Tragstege vom Rand der siebartigen Abdeckung zur Mitte hin um zumindest annährend die Hälfte zunimmt. Da der Mittelbereich der siebartigen Abdeckung am weitesten von ihren Auflagerpunkten an den Vorratsbehälterwänden entfernt ist, ist genau dieser Mittelbereich infolge dieser Maßnahme mit einem erhöhten Widerstandsmoment geschaffen. In vorteilhafter Weise wird infolge dieser Maßnahme die aufrechte Grundform der Tragstege genutzt, um die siebartige Abdeckung an die auftretenden Belastungen anzupassen. Somit kann im Bereich geringer Belastungen durch eine im Vergleich zur Mitte verringerte Höhe Material eingespart werden, wodurch eine besonders leichte Umsetzung geschaffen ist.

Ferner ist eine erfindungsgemäße Verteilmaschine vorteilhaft, bei der die Tragstege vom Rand der siebartigen Abdeckung zur Mitte hin, vorzugsweise beidseitig, besonders vorzugsweise konvex, gewölbt, ausgebildet sind, wobei die Tragstege vorzugsweise an ihrer der Dosiereinrichtung zugewandten Unterseite stärker gewölbt sind als an der Oberseite. Durch die gewölbte Form wird eine besonders stetige und vorteilhafte Spannungsverteilung innerhalb der Tragstege erreicht. Insbesondere für die Herstellung der siebartigen Abdeckung durch ein Spritzgussverfahren sind die Tragstege infolge dieser Maßnahme unempfindlich für Schwindung bzw. Einfallstellen.

In einer weiteren vorteilhaften Ausführungsform der erfindungsgemäßen Verteilmaschine weisen die Tragstege und die Siebelemente zumindest annährend die gleiche Breite auf, wobei die Tragstege zumindest annährend die doppelte Höhe der Siebelemente aufweisen. Durch das Höhenverhältnis zwischen Tragstegen und Siebelementen wird einerseits weiteres Material und somit Gewicht eingespart und andererseits die Verstopfungsgefahr der siebartigen Abdeckung gesenkt. Kleinere Kluten, die einfach von der Dosiereinrichtung zerkleinert werden, können problemlos zwischen den Tragstegen und den Siebelementen hindurchfallen, so dass das Material ungehindert nachrieseln kann.

Die erfindungsgemäße Verteilmaschine ist außerdem vorteilhaft dadurch weitergebildet, dass die Tragstege und/oder die Siebelemente sich von der Oberseite der siebartigen Abdeckung zur der Dosiereinrichtung zugewandten Unterseite in der Breite verjüngend ausgebildet sind. Infolge dieser Maßnahme ergibt sich, insbesondere zwischen Tragstegen und Siebelementen, eine öffnende Schrägung, wodurch die Verstopfungsgefahr der siebartigen Abdeckung weiter reduziert ist. Kluten, die insbesondere geringfügig größer sind als die lichte Maschenweite, können mit einem Fußtritt vom Benutzer durch die siebartige Abdeckung hindurchgetreten werden ohne die Siebelemente zu zerstören.

Eine besonders einfache Handhabung der siebartigen Abdeckung wird für die erfindungsgemäße Verteilmaschine geschaffen, indem die siebartige Abdeckung mittels zumindest eines Scharniers aus einer die Dosiereinrichtung abdeckenden Sicherungsstellung in eine die Dosiereinrichtung zugänglich machende Freigabestellung verbringbar ist, wobei das zumindest eine Scharnier zumindest teilweise an die siebartige Abdeckung angeformt ist. Das Scharnier kann sich aus einem Gegenstück an zumindest einer Vorratsbehälterwand und dem an der siebartigen Abdeckung angeformten Teils des Scharniers zusammensetzen.

Insbesondere greift das dem Vorratsbehälter zugeordnete Gegenstück in den an der Abdeckung angeformten Teil des Scharniers ein und ist durch ein einschiebbares Sicherungselement drehbar befestigt, so dass sich eine Drehachse für das Scharnier ergibt, um welche die Abdeckung aus der Sicherungsstellung in die Freigabestellung drehbar verbringbar ist. Das Gegenstück kann eine Klinke zur lösbaren Sicherung der siebartigen Abdeckung in der Freigabestellung aufweisen, welche mit einer auf die siebartige Abdeckung aufsteckbaren oder angespritzen Verriegelung nach dem Prinzip einer Clickverbindung zusammenwirkt. Infolge dieser Maßnahme ist die siebartige Abdeckung in vorteilhafter Weise mit einem funktionsintegrierten Scharnier geschaffen.

In einer weiteren vorteilhaften Weiterbildung der erfindungsgemäßen Verteilmaschine ist vorgesehen, dass der Vorratsbehälter mehrere beabstandet zueinander angeordnete Auflageelemente aufweist, wobei die Gitterstruktur der Tragstege und/oder Siebelemente im Bereich der Auflageelemente durch eine Stützfläche unterbrochen ist. Durch Schließen der Gitterstruktur mittels einer Stützfläche im Bereich der Auflageelemente wird ein erhöhtes, flächiges Widerstandsmoment für die Auflagerpunkte an den Auflageelementen geschaffen, so dass die Tragfähigkeit der siebartigen Abdeckung weiter gesteigert ist. Die Stützfläche kann besonders einfach integriert werden, wodurch eine weitere Funktion in der siebartigen Abdeckung aufgeht, also die siebartige Abdeckung funktionsintegriert gestaltet ist. Die Teileanzahl und der Montageaufwand sind in zweckmäßig Weise somit reduziert.

Außerdem ist eine erfindungsgemäße Verteilmaschine bevorzugt, bei welcher der Vorratsbehälter eine die siebartige Abdeckung in der Sicherungsstellung lösbar festsetzende Verriegelungseinrichtung umfasst, wobei die siebartige Abdeckung eine mit der Verriegelungseinrichtung zusammenwirkende Ausnahme aufweist. Die Ausnahme ist besonders einfach und zweckmäßig an der siebartigen Abdeckung ausformbar, so dass die Sicherheit durch eine weitere Funktionsintegration in die Abdeckung gesteigert ist.

Die der Erfindung zugrundeliegende Aufgabe wird ferner durch eine siebartige Abdeckung mit den Merkmalen des Anspruchs 13 gelöst.

Erfindungsgemäß ist die siebartige Abdeckung gemäß einer der vorstehend beschriebenen Ausführungsformen der erfindungsgemäßen Verteilmaschine ausgebildet. Bezüglich der Vorteile und Modifikationen der erfindungsgemäßen siebartigen Abdeckung wird zunächst auf die Vorteile und Modifikationen der erfindungsgemäßen Verteilmaschine verwiesen.

Weitere Einzelheiten der Erfindung sind der Beispielsbeschreibung und den Zeichnungen zu entnehmen. Die Zeichnungen zeigen
- Fig.1: ein Ausführungsbeispiel der erfindungsgemäßen Verteilmaschine mit je einer geöffneten und einer geschlossenen erfindungsgemäßen siebartigen Abdeckung in perspektivischer Darstellung,
- Fig.2: die in der Fig. 1 gezeigte Verteilmaschine in Draufsicht,
- Fig.3: die in den Fig. 1 und 2 gezeigte siebartige Abdeckung in Schnittansicht B-B,
- Fig.4: die in den Fig. 1 und 2 gezeigte siebartige Abdeckung in Schnittansicht A-A,
- Fig.5: eine der in den Fig. 1 und 2 gezeigten siebartigen Abdeckungen in perspektivischer Ansicht von unten, und
- Fig.6: eine der in den Fig. 1 und 2 gezeigten siebartigen Abdeckungen in Draufsicht im Detail.

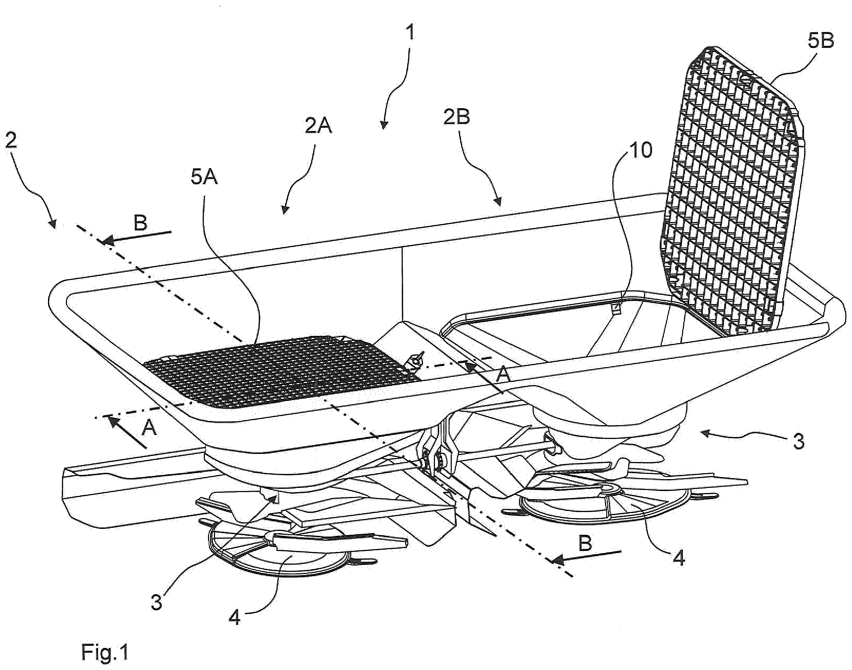

Eine als Düngerstreuer 1 ausgeführte Verteilmaschine ist in Fig.1 zu sehen. Der Düngerstreuer 1 umfasst einen Vorratsbehälter 2 für den zu verteilenden Dünger, welcher sich in seinem unteren Bereich in zwei trichterförmig zulaufende Hälften 2A, 2B unterteilt. Die beiden Hälften 2A, 2B des Vorratsbehälters 2 weisen jeweils im unteren Bereich eine als Rühreinrichtung 3 ausgebildete Dosiereinrichtung auf. Die Rühreinrichtungen 3 sind rotierend antreibbar, um einen stetigen Düngerstrom auf unter den Rühreinrichtungen 3 angeordnete Schleuderscheiben 4 zu ermöglichen.

Der Düngerstreuer 1 umfasst ferner zwei, aus einem thermoplastischen Kunststoff gebildete siebartige Abdeckungen, welche als Kunststoffgitter 5A, 5B ausgeführt sind. Die Kunststoffgitter 5A, 5B weisen eine rechteckförmige Grundform mit im 45 Grad Winkel abgeschrägten Ecken auf und sind durch eine umlaufende Zarge eingefasst. Jeder der beiden Hälften 2A, 2B ist ein oberhalb der jeweiligen Rühreinrichtung 3 angeordnetes, selbsttragendes Kunststoffgitter 5A, 5B zugeordnet, wobei sich das Kunststoffgitter 5A in einer die Rühreinrichtung 3 abdeckenden, geschlossenen Sicherungsstellung befindet und das Kunststoffgitter 5B sich in einer die Rühreinrichtung 3 zugänglich machenden, geöffneten Freigabestellung befindet. Die Kunststoffgitter 5A, 5B sind mittels zweier Scharniere 6 aus der Sicherungsstellung in die Freigabestellung verbringbar und umgekehrt, wobei die Scharniere 6 in Fig.1 verdeckt sind.

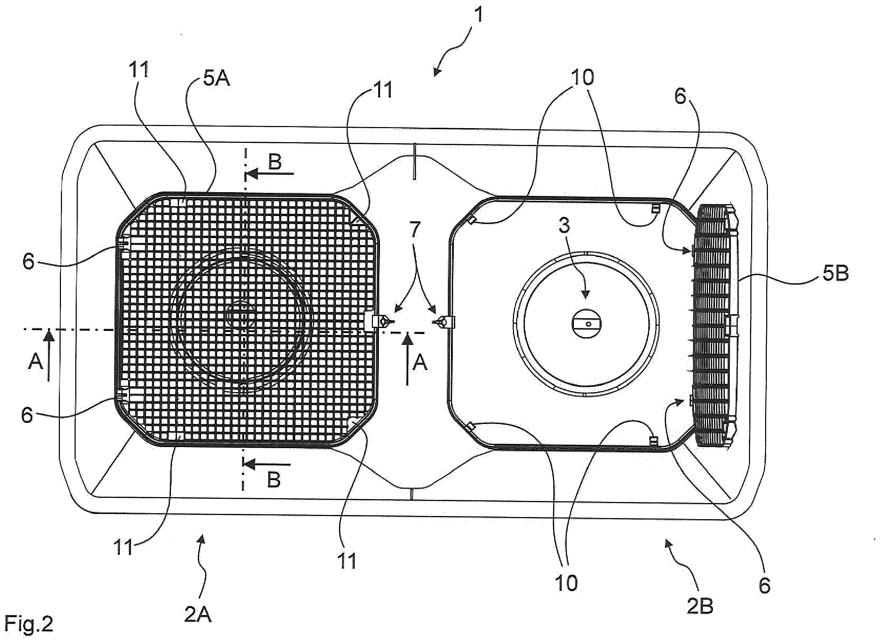

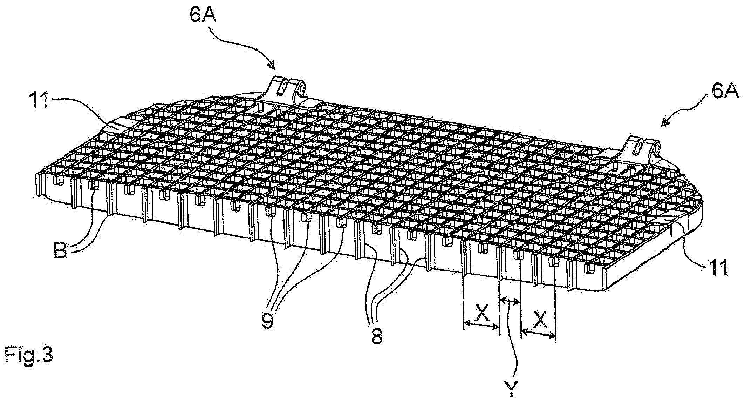

In Fig.2 ist der Düngerstreuer 1 in einer Draufsicht von oben zu sehen. Wie das in Freigabestellung befindliche rechte Kunststoffgitter 5B schon impliziert, sind die jeweils zwei Scharniere 6 an der rechten und linken Seite des Vorratsbehälters 2 angeordnet. Ein Teil 6A des Scharniers 6 ist einteilig mit dem Kunststoffgitter 5A, 5B ausgeführt, gezeigt in Fig.3, indem es bei der Herstellung des Kunststoffgitters 5A, 5B im Spritzgussverfahren mit angeformt wird und ein Gegenstück 6B ist an der jeweiligen Seitenwand des Vorratsbehälters 2 angeordnet. Das Gegenstück 6B greift in den Teil 6A am Kunststoffgitter 5A, 5B ein und wird durch ein Sicherungselement drehbar befestigt, so dass sich das Scharnier 6 ergibt. Das Gegenstück 6B weist außerdem eine Klinke auf mittels der das Kunststoffgitter 5A, 5B lösbar in Freigabestellung haltbar ist, wie in Fig.1 und 2 anhand des Kunststoffgitters 5B zu sehen.

Um das Kunststoffgitter 5A in der geschlossenen Sicherungsstellung lösbar festzusetzen, umfasst der Vorratsbehälter 2 zwei Verriegelungseinrichtungen 7. Die Verriegelungseinrichtung 7 wirkt mit dem Kunststoffgitter 5A bzw. 5B nach dem Prinzip einer Schnappverbindung zusammen und hält dieses so in der Sicherungsstellung lösbar nieder. Hierzu ist am Kunststoffgitter 5A, 5B eine Ausnahme vorgesehen, in die die Verriegelungseinrichtung 7 eingreifen kann. In vorteilhafter Weise kann die Ausnahme direkt bei der Herstellung des Kunststoffgitters mit ausgeformt werden. Um das Kunststoffgitter 5A, 5B zu öffnen kann die Verriegelungseinrichtung 7 entweder mit einem Werkzeug oder werkzeuglos zurückgedrückt werden, so dass sie außer Eingriff mit der Ausnahme gerät. Das Kunststoffgitter 5A, 5B wird somit nicht länger nieder gehalten und ist mittels der Scharniere 6 in die Freigabestellung verschwenkbar.

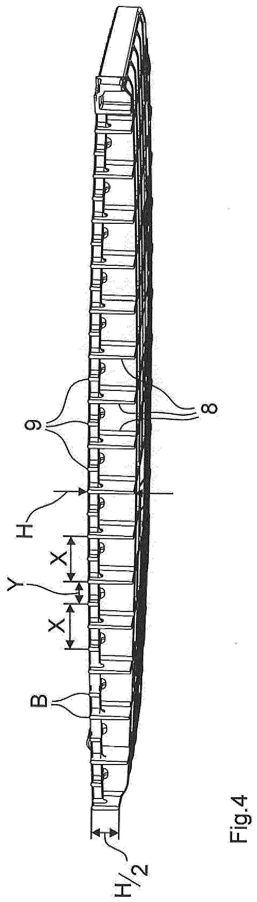

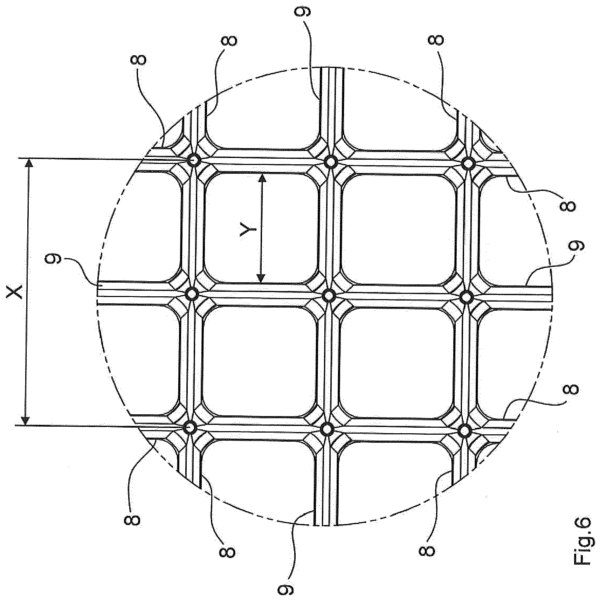

In Fig.3 ist das Kunststoffgitter 5A in Schnittansicht B-B gemäß der Fig.1 und 2 gezeigt. Wie die Schnittansicht erkennen lässt sind die Kunststoffgitter 5A, 5B im Wesentlichen gebildet durch eine Kombination aus aufrechten Tragstegen 8 und balkenartigen Siebelementen 9. Die Tragstege 8 sind hochkant angeordnet und verleihen den Kunststoffgittern 5A, 5B somit besondere Festigkeit. In Zusammenschau mit der Schnittansicht A-A in Fig.4 wird deutlich, dass die Tragstege 8 und die Siebelemente 9 jeweils in einer Gitterstruktur mit rechteckigen Maschen angeordnet sind. Und zwar weisen sowohl die Tragstege 8 als auch die Siebelemente 9 eine Maschenteilung X von annähenden 50 Millimetern auf. Die Tragstege 8 sind folglich untereinander 50 Millimeter beabstandet und die Siebelemente 9 sind ebenfalls 50 Millimeter zueinander beabstandet. Durch eine Verschiebung der Gitterstruktur der Tragstege 8 um eine halbe Maschenteilung X in Längsrichtung und Querrichtung zu der Gitterstruktur der Siebelemente 9 ergibt sich so eine lichte Maschenweite Y von annährend 20 Millimetern für die Kunststoffgitter 5A, 5B. Diese lichte Maschenweite Y entspricht einer halben Maschenteilung X abzüglich der Breite B eines Tragsteges 8 oder eines Siebelementes 9. Besonders deutlich wird dies in Fig.6, welche eine Draufsicht der Kunststoffgitter 5A, 5B im Detail zeigt. Durch die derartig versetzt zueinander angeordneten Tragstege 8 und Siebelemente 9 wird somit eine alternierende Abfolge zwischen Tragstegen 8 und Siebelementen 9 geschaffen.

Wie die Fig. 3 und 4 ferner zeigen, nimmt die Höhe H der Tragstege 8 vom Rand des Kunststoffgitters 5A, 5B zur Mitte hin um etwa die Hälfte zu. Während die Tragstege 8 in der Mitte die Höhe H aufweisen, haben die Tragstege am Rand etwa die Höhe H/2. Die Tragstege 8 sind dabei zumindest annährend doppelt so hoch wie die Siebelemente 9, wobei die Tragstege 8 und die Siebelemente 9 die gleiche Breite B aufweisen. Die Breite B der Tragstege 8 und der Siebelemente 9 verjüngt sich von der Oberseite des Kunststoffgitters 5A, 5B zur Unterseite, so dass sich eine öffnende Schrägung ergibt. Kluten die knapp größer als die Maschenweite Y sind können so leichter gehandhabt werden, indem sie bspw. vom Benutzer mit dem Fuß durch das Kunststoffgitter 5A, 5B getreten werden. Die Kunststoffgitter 5A, 5B sind hierzu für den Benutzer begehbar. Die Tragstege 8 und die Siebelemente 9 weisen an ihrer Oberseite einen besonders kleinen Radius auf und bilden einen einheitlichen Abschluss aus, sind also zur Oberseite hin auf annährend der gleichen Höhe angeordnet, so dass sich eine griffige Struktur für das Schuhprofil des Benutzers ergibt.

Die Tragstege 8 sind ferner vom Rand des Kunststoffgitters 5A, 5B zur Mitte hin beidseitig konvex gewölbt, wobei die der Rühreinrichtung 3 zugewandte Unterseite stärker gewölbt ist als die Oberseite. Die Kunststoffgitter 5A, 5B sind somit extrem biegesteif und im Spritzgussverfahren gefertigte Kunststoffgitter 5A, 5B sind außerdem vor Einfall geschützt.

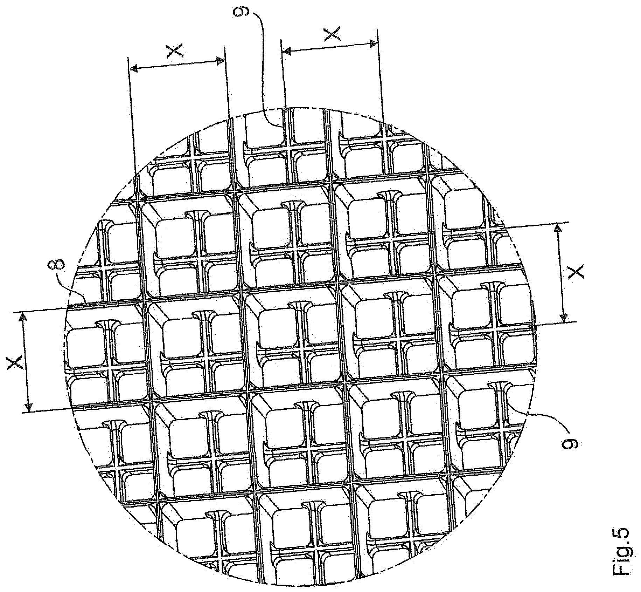

Wie bereits zuvor beschrieben, bilden die Tragstege 8 und die Siebelemente 9 gemeinsam die Oberfläche der Oberseite des Kunststoffgitters 5A, 5B, indem sie nebeneinander alternierend angeordnet sind, so dass sich die siebartige Struktur mit einer lichten Maschenweite Y von zumindest annährend 20 Millimetern ergibt. Um dem Kunststoffgitter 5A, 5B darüber hinaus besonders große Stabilität zu verleihen, erstrecken sich die Tragstege 8 wesentlich weiter Richtung Unterseite als die Siebelemente 9, wie die Fig.3 bis 5 zeigen.

In Fig.2 ist zu sehen, dass der Vorratsbehälter 2 mehrere beabstandet zueinander angeordnete Auflageelemente 10 aufweist. Pro Hälfte 2A, 2B des Vorratsbehälters 2 bzw. Kunststoffgitter 5A, 5B sind vier Auflageelemente 10 an den Vorratsbehälterwänden angeordnet. Die Auflageelemente 10 sind dazu vorgesehen, dass die Kunststoffgitter 5A, 5B sich in der geschlossenen Sicherungsstellung über diese am Vorratsbehälter 2 abstützen. Um die auf das Kunststoffgitter 5A, 5B wirkenden Kräfte besonders zuverlässig über die Auflageelemente 10 an den Vorratsbehälter 2 zu übertragen, ist die Gitterstruktur der Tragstege 8 und der Siebelemente 9 im Bereich der Auflageelemente 10 durch eine Stützfläche 11 unterbrochen. Durch die Stützflächen 11 ist die Stabilität und das Flächenträgheitsmoment in diesen Bereichen erhöht, was vorteilhaft ist für die Spannungsverteilung.

### Bezugszeichenliste

- 1: Düngerstreuer
- 2: Vorratsbehälter
- 2A, 2B: Hälfte
- 3: Rühreinrichtung
- 4: Schleuderscheibe
- 5A, 5B: Kunststoffgitter
- 6: Scharnier
- 6A: Teil
- 6B: Gegenstück
- 7: Verriegelungseinrichtung
- 8: Tragsteg
- 9: Siebelement
- X: Maschenteilung
- Y: Maschenweite
- H: Höhe
- B: Breite
- 10: Auflageelement
- 11: Stützfläche

## Patentansprüche

1. Verteilmaschine (1), insbesondere Düngerstreuer (1), mit einem Vorratsbehälter (2), zumindest einer im unteren Bereich des Vorratsbehälters (2) angeordneten, angetriebenen Dosiereinrichtung (3) und zumindest einer selbsttragend ausgebildeten, oberhalb der Dosiereinrichtung (3) im Vorratsbehälter (2) angeordneten siebartigen Abdeckung (5A, 5B), **dadurch gekennzeichnet, dass** die siebartige Abdeckung (5A, 5B) aus einem thermoplastischen Kunststoff gebildet ist, dass die siebartige Abdeckung (5A, 5B) im Wesentlichen gebildet ist durch aufrechte Tragstege (8) und balkenartige Siebelemente (9), wobei die Höhe (H) der Tragstege (8) vom Rand der siebartigen Abdeckung (5A, 5B) zur Mitte hin zunimmt.

2. Verteilmaschine (1) nach Anspruch 1, **dadurch gekennzeichnet, dass** die Tragstege (8) und die Siebelemente (9) jeweils in einer Gitterstruktur mit vorzugsweise nahezu rechteckigen Maschen angeordnet sind.

3. Verteilmaschine (1) nach Anspruch 1 oder 2, **dadurch gekennzeichnet, dass** die Tragstege (8) eine Maschenteilung (X) von zumindest annährend 50 Millimetern aufweisen.

4. Verteilmaschine (1) nach zumindest einem der Ansprüche 1 bis 3, **dadurch gekennzeichnet, dass** die Siebelemente (9) eine Maschenteilung (X) von zumindest annährend 50 Millimetern aufweisen.

5. Verteilmaschine (1) nach zumindest einem der Ansprüche 1 bis 4, **dadurch gekennzeichnet, dass** die Tragstege (8) und die Siebelemente (9) derart, vorzugsweise in Längsrichtung und Querrichtung um annährend eine halbe Maschenteilung (X), versetzt zueinander angeordnet sind, dass sich eine lichte Maschenweite (Y) von zumindest annährend 20 Millimetern für die siebartige Abdeckung (5A, 5B) ergibt.

6. Verteilmaschine (1) nach zumindest einem der Ansprüche 3 bis 6, **dadurch gekennzeichnet, dass** die Höhe (H) der Tragstege (8) vom Rand der siebartigen Abdeckung (5A, 5B) zur Mitte hin um zumindest annährend die Hälfte zunimmt.

7. Verteilmaschine (1) nach zumindest einem der Ansprüche 1 bis 6, **dadurch gekennzeichnet, dass** die Tragstege (8) vom Rand der siebartigen Abdeckung (5A, 5B) zur Mitte hin, vorzugsweise beidseitig, besonders vorzugsweise konvex, gewölbt, ausgebildet sind, dass die Tragstege (8) vorzugsweise an ihrer der Dosiereinrichtung (3) zugewandten Unterseite stärker gewölbt sind als an der Oberseite.

8. Verteilmaschine (1) nach zumindest einem der Ansprüche 1 bis 7, **dadurch gekennzeichnet, dass** die Tragstege (8) und die Siebelemente (9) zumindest annährend die gleiche Breite (B) aufweisen, dass die Tragstege (8) zumindest annährend die doppelte Höhe der Siebelemente (9) aufweisen.

9. Verteilmaschine (1) nach zumindest einem der Ansprüche 1 bis 8, **dadurch gekennzeichnet, dass** die Tragstege (8) und/oder die Siebelemente (9) sich von der Oberseite der siebartigen Abdeckung (5A, 5B) zur der Dosiereinrichtung (3) zugewandten Unterseite in der Breite (B) verjüngend ausgebildet sind.

10. Verteilmaschine (1) nach zumindest einem der vorstehenden Ansprüche, **dadurch gekennzeichnet, dass** die siebartige Abdeckung (5A, 5B) mittels zumindest eines Scharniers (6) aus einer die Dosiereinrichtung (3) abdeckenden Sicherungsstellung in eine die Dosiereinrichtung (3) zugänglich machende Freigabestellung verbringbar ist, dass das Scharnier (6) zumindest teilweise an die siebartige Abdeckung (5A, 5B) angeformt ist.

11. Verteilmaschine (1) nach zumindest einem der Ansprüche 2 bis 10, **dadurch gekennzeichnet, dass** der Vorratsbehälter (2) mehrere beabstandet zueinander angeordnete Auflageelemente (10) aufweist, dass die Gitterstruktur der Tragstege (8) und/oder Siebelemente (9) im Bereich der Auflageelemente (10) durch eine Stützfläche (11) unterbrochen ist.

12. Verteilmaschine (1) nach Anspruch 10, **dadurch gekennzeichnet, dass** der Vorratsbehälter (2) eine die siebartige Abdeckung (5A, 5B) in der Sicherungsstellung lösbar festsetzende Verriegelungseinrichtung (7) umfasst, dass die siebartige Abdeckung (5A, 5B) eine mit der Verriegelungseinrichtung (7) zusammenwirkende Ausnahme aufweist.

13. Siebartige Abdeckung (5A, 5B) für einen Vorratsbehälter (2) einer als Düngerstreuer (1) ausgebildeten Verteilmaschine (1), **dadurch gekennzeichnet, dass** die siebartige Abdeckung (5A, 5B), vorzugsweise im Spritzgießverfahren, aus thermoplastischem Kunststoff gebildet ist, dass die siebartige Abdeckung (5A, 5B) nach zumindest einem der Ansprüche 1 bis 12 ausgebildet ist.

## Claims

1. Distribution machine (1), in particular a fertilizer spreader (1), comprising a storage container (2), at least one driven metering device (3) arranged in a lower region of the storage container (2), and at least one self-supporting sieve-like cover (5A, 5B) arranged above the metering device (3) in the storage container (2), **characterized in that** the sieve-like cover (5A, 5B) is formed of a thermoplastic plastics material, and that the sieve-like cover (5A, 5B) is substantially formed by upright support webs (8) and beam-like sieve elements (9), the height (H) of the support webs (8) increasing from the edge of the sieve-like cover (5A, 5B) toward the center.

2. Distribution machine (1) according to claim 1, **characterized in that** the support webs (8) and the sieve elements (9) are each arranged in a lattice structure having preferably virtually rectangular meshes.

3. Distribution machine (1) according to either claim 1 or claim 2, **characterized in that** the support webs (8) have a mesh spacing (X) of at least approximately 50 millimeters.

4. Distribution machine (1) according to at least one of claims 1 to 3, **characterized in that** the sieve elements (9) have a mesh spacing (X) of at least approximately 50 millimeters.

5. Distribution machine (1) according to at least one of claims 1 to 4, **characterized in that** the support webs (8) and the sieve elements (9) are arranged so as to be offset relative to one another, preferably in the longitudinal direction and transverse direction by approximately half a mesh spacing (X), in such a way that a clear mesh width (Y) of at least approximately 20 millimeters is provided for the sieve-like cover (5A, 5B).

6. Distribution machine (1) according to at least one of claims 3 to 6, **characterized in that** the height (H) of the support webs (8) increases from the edge of the sieve-like cover (5A, 5B) toward the center by at least approximately half.

7. Distribution machine (1) according to at least one of claims 1 to 6, **characterized in that** the support webs (8) are curved from the edge of the sieve-like cover (5A, 5B) toward the center, preferably on both sides, particularly preferably convexly, and that the support webs (8) are preferably more curved on their underside facing the metering device (3) than on the upper side.

8. Distribution machine (1) according to at least one of claims 1 to 7, **characterized in that** the support webs (8) and the sieve elements (9) have at least approximately the same width (B), and that the support webs (8) are at least approximately twice the height of the sieve elements (9).

9. Distribution machine (1) according to at least one of claims 1 to 8, **characterized in that** the support webs (8) and/or the sieve elements (9) are designed to taper in width (B) from the upper side of the sieve-like cover (5A, 5B) to the underside facing the metering device (3).

10. Distribution machine (1) according to at least one of the preceding claims, **characterized in that** the sieve-like cover (5A, 5B) can be moved by means of at least one hinge (6) from a securing position covering the metering device (3) into a release position in which the metering device (3) is accessible, and that the hinge (6) is at least partially molded onto the sieve-like cover (5A, 5B).

11. Distribution machine (1) according to at least one of claims 2 to 10, **characterized in that** the storage container (2) comprises a plurality of support elements (10) arranged at a distance from one another, and that the lattice structure of the support webs (8) and/or sieve elements (9) is interrupted in the region of the support elements (10) by a support surface (11).

12. Distribution machine (1) according to claim 10, **characterized in that** the storage container (2) comprises a locking device (7) which releasably locks the sieve-like cover (5A, 5B) in the securing position, and that the sieve-like cover (5A, 5B) comprises a recess which interacts with the locking device (7).

13. Sieve-like cover (5A, 5B) for a storage container (2) of a distribution machine (1) designed as a fertilizer spreader (1), **characterized in that** the sieve-like cover (5A, 5B) is formed, preferably by injection molding, of thermoplastic plastics material, and that the sieve-like cover (5A, 5B) is designed according to at least one of claims 1 to 12.

## Revendications

1. Machine de distribution (1), en particulier épandeuse d'engrais (1), comportant un réservoir de stockage (2), au moins un appareil de dosage (3) entraîné, agencé dans la zone inférieure du réservoir de stockage (2) et au moins un recouvrement (5A, 5B) de type tamis, réalisé de manière autoportante, agencé au-dessus de l'appareil de dosage (3) dans le réservoir de stockage (2), **caractérisée en ce que** le recouvrement (5A, 5B) de type tamis est formé à partir d'un matériau synthétique thermoplastique, **en ce que** le recouvrement (5A, 5B) de type tamis est sensiblement formé d'âmes porteuses (8) verticales et d'éléments de tamis (9) sous forme de barres, la hauteur (H) des âmes porteuses (8) augmentant à partir du bord du recouvrement (5A, 5B) de type tamis vers le centre.

2. Machine de distribution (1) selon la revendication 1,
**caractérisée en ce que** les âmes porteuses (8) et les éléments de tamis (9) sont respectivement agencés dans une structure de grille comportant des mailles de préférence quasiment rectangulaires.

3. Machine de distribution (1) selon la revendication 1 ou 2,
**caractérisée en ce que** les âmes porteuses (8) présentent un pas de maille (X) d'au moins approximativement 50 mm.

4. Machine de distribution (1) selon au moins l'une des revendications 1 à 3, **caractérisée en ce que** les éléments de tamis (9) présentent un pas de maille (X) d'au moins approximativement 50 mm.

5. Machine de distribution (1) selon au moins l'une des revendications 1 à 4, **caractérisée en ce que** les âmes porteuses (8) et les éléments de tamis (9) sont agencés, de préférence dans la direction longitudinale et dans la direction transversale, de manière décalée approximativement d'un demi-pas de maille (X) les uns par rapport aux autres de telle sorte qu'on obtient une ouverture de maille intérieure (Y) d'au moins approximativement 20 mm pour le recouvrement (5A, 5B) de type tamis.

6. Machine de distribution (1) selon au moins l'une des revendications 3 à 6, **caractérisée en ce que** la hauteur (H) des âmes porteuses (8) à partir du bord du recouvrement (5A, 5B) de type tamis vers le centre augmente au moins approximativement de la moitié.

7. Machine de distribution (1) selon au moins l'une des revendications 1 à 6, **caractérisée en ce que** les âmes porteuses (8) sont réalisées, à partir du bord du recouvrement (5A, 5B) de type tamis vers le centre, de manière bombée, de préférence des deux côtés, de manière particulièrement préférée de manière convexe, **en ce que** les âmes porteuses (8) sont de préférence bombées plus fortement au niveau de leur face inférieure, orientée vers l'appareil de dosage (3), qu'au niveau de la face supérieure.

8. Machine de distribution (1) selon au moins l'une des revendications 1 à 7, **caractérisée en ce que** les âmes porteuses (8) et les éléments de tamis (9) présentent au moins approximativement la même largeur (B), **en ce que** les âmes porteuses (8) présentent au moins approximativement la hauteur double par rapport à celle des éléments de tamis (9).

9. Machine de distribution (1) selon au moins l'une des revendications 1 à 8, **caractérisée en ce que** les âmes porteuses (8) et/ou les éléments de tamis (9) sont réalisés de manière à rétrécir en largeur (B) à partir de la face supérieure du recouvrement (5A, 5B) de type tamis vers la face inférieure orientée vers l'appareil de dosage (3).

10. Machine de distribution (1) selon au moins l'une des revendications précédentes, **caractérisée en ce que** le recouvrement (5A, 5B) de type tamis peut être amené, à l'aide d'au moins une charnière (6), à partir d'une position de sécurité recouvrant l'appareil de dosage (3) dans une position de libération, rendant l'appareil de dosage (3) accessible, **en ce que** la charnière (6) est moulée au moins partiellement sur le recouvrement (5A, 5B) de type tamis.

11. Machine de distribution (1) selon au moins l'une des revendications 2 à 10, **caractérisée en ce que** le réservoir de stockage (2) présente plusieurs éléments d'appui (10) agencés à une certaine distance les uns des autres, **en ce que** la structure de grille des âmes porteuses (8) et/ou des éléments de tamis (9) est interrompue, dans la zone des éléments d'appui (10), par une surface de support (11).

12. Machine de distribution (1) selon la revendication 10,
**caractérisée en ce que** le réservoir de stockage (2) comprend un appareil de verrouillage (7) fixant de manière amovible le recouvrement (5A, 5B) de type tamis dans la position de sécurité, **en ce que** le recouvrement (5A, 5B) de type tamis présente un évidement coopérant avec l'appareil de verrouillage (7).

13. Recouvrement (5A, 5B) de type tamis pour un réservoir de stockage (2) d'une machine de distribution (1) réalisée sous forme d'une épandeuse d'engrais (1), **caractérisé en ce que** le recouvrement (5A, 5B) de type tamis est formé, de préférence dans un procédé de moulage par injection, en un matériau synthétique thermoplastique, **en ce que** le recouvrement (5A, 5B) de type tamis est réalisé selon au moins l'une des revendications 1 à 12.
